# EUROPÄISCHE PATENTSCHRIFT

(11) **EP 2 865 275 B1**
(45) Veröffentlichungstag und Bekanntmachung des Hinweises auf die Patenterteilung: **26.02.2020**
(21) Anmeldenummer: 13190055.7
(22) Anmeldetag: 24.10.2013
(51) Int. Cl.: A23K 10/12, A23K 20/142, A23K 20/158, A23K 40/10, A23K 40/30

(54) **L-Aminosäure enthaltendes Futtermitteladditiv**
Food additive containing L-amino acid
Additifs de nourriture pour animaux contenant des acides animés L

(43) Veröffentlichungstag der Anmeldung: 29.04.2015
(73) Patentinhaber: Evonik Operations GmbH, 45128 Essen (DE)
(72) Erfinder: Oelmann, Ansgar, 63571 Gelnhausen (DE); Alt, Hans Chrsitian, 63571 Gelnhausen (DE); Dr. Blümke, Wilfried, 61137 Schöneck (DE); Dr. Becker, Franz Ulrich, 63579 Freigericht-Horbach (DE); Conrad, Christopher John, Omaha, NE 68116 (US)
(74) Vertreter: Evonik Patent Association

(56) Entgegenhaltungen:
- EP-A1- 1 752 543
- EP-A2- 0 615 693
- EP-A2- 0 923 878
- WO-A2-2007/141111
- WO-A2-2008/006680
- DE-A1-102006 016 158
- DE-A1-102008 001 874
- US-A1- 2007 082 031
- US-B1- 6 238 728

## Beschreibung

Die Erfindung betrifft L-Aminosäure enthaltende Futtermitteladditive auf Fermentationsbrühe-Basis, die eine oberflächenaktive Substanz enthalten, sowie einen Granulationsprozess zur Herstellung dieser Futtermitteladditive und wird durch die Ansprüche definiert.

### Stand der Technik

Tierfuttermittel werden mit einzelnen Aminosäuren entsprechend dem Bedarf der Tiere supplementiert. Zur Supplementierung von Tierfuttermitteln, z.B. mit L-Lysin, wird bisher weit überwiegend das L-Lysin-monohydrochlorid mit einem L-LysinGehalt von ca. 80 % eingesetzt. Da das L-Lysin durch Fermentation hergestellt wird, muss es zur Herstellung des Monohydrochlorids zunächst einmal von allen übrigen Bestandteilen der rohen Fermentationsbrühe in aufwendigen Verfahrensschritten abgetrennt, dann in das Monohydrochlorid umgewandelt und letzteres zur Kristallisation gebracht werden. Dabei fällt eine große Anzahl von Nebenprodukten und die zur Aufarbeitung notwendigen Reagenzien als Abfall an. Da eine hohe Reinheit des Tierfuttermittelsupplements nicht immer notwendig ist und zudem in den Nebenprodukten der Fermentation oft noch nutritiv wirksame Wertstoffe enthalten sind, hat es daher in der Vergangenheit nicht an Versuchen gefehlt, die aufwendige Herstellung von Futter-Aminosäuren, insbesondere von reinem L-Lysin-Monohydrochlorid, zu vermeiden und die rohe Fermentationsbrühe kostengünstiger in ein festes Tierfuttermittel zu überführen.

Die EP 0 533 039 betrifft Verfahren zur Herstellung eines Aminosäure-Tierfuttermittelsupplements auf Fermentationsbrühe-Basis, wobei das Supplement direkt durch Sprühtrocknung aus der Fermentationsbrühe gewonnen werden kann. Hierzu wird bei einer Variante ein Teil der Biomasse vor der Sprühtrocknung abgetrennt.

In der EP 0 615 693 wird ein Verfahren zur Herstellung eines Tierfuttermittel-Additives auf Fermentationsbrühe-Basis offenbart, bei dem man die Fermentationsbrühe, ggf. nach Entfernung eines Teils der Inhaltsstoffe, zu einem Feinkorn, das zu mind. 70 Gew.-% eine maximale Partikelgröße von 100 µm hat, sprühtrocknet, und weiterhin dieses Feinkorn in einer zweiten Stufe zu einem Granulat aufbaut, das zu mind. 30 Gew.-% das Feinkorn enthält.

Gemäß GB 1 439 728 wird ein L-Lysin enthaltendes Konzentrat aus einer Fermentationsbrühe hergestellt, die man vor der Aufkonzentration mit HCl auf einen pH von ca. 6,4 ansäuert und der man zur Stabilisierung Bisulfit zusetzt. Nach der Eindampfung wird weiter auf einen pH-Wert von 4,0 angesäuert und das gewünschte Produkt durch Sprühtrocknung erhalten.

Ein Futtermittelzusatz, basierend auf Fermentationsbrühe, ist in EP 0 809 940 B1 (US 5,840,358) beschrieben, welcher in granulierter Form in einem Fließbett gewonnen wird. Staubabrasion in der nachfolgenden Aufarbeitung ist allerdings ein Nachteil dieses Produktes.

Aus diesem Grund wird die zusätzliche Zugabe von Additiven in der weiteren Aufarbeitung, wie das Versprühen von Aerosolen von Mineralölen, zur Unterdrückung der Staubbildung in GB 2 293 304 A beschrieben.

In der WO 2004/054381 ist die Herstellung eines Lysin-haltigen Futtermittels, basierend auf Fermentationsbrühe, und die Zugabe von Additiven in der Aufarbeitung beschrieben, wobei die Zugabe von Mineralölen, Pflanzenölen oder Mischungen von Pflanzenölen, insbesondere Sojabohnenöl, Olivenöl und Mischungen von Sojabohnenöl mit Lecithin genannt werden, um die Abrasion der Granulate und die Staubbildung zu beeinflussen.

Ein Nachteil solcher granulierten Produkte ist in der Regel die nicht beeinflussbare geringe spätere Schüttdichte der Granulate, was Nachteile bei Packungsvolumina und dadurch erhöhte Transportkosten ergibt.

In WO 2004/054381 wird beschrieben, dass durch die nachträgliche Zugabe von Öl eine Erhöhung der Schüttdichte erreicht werden kann, allerdings ist hierzu ein zusätzlicher Verfahrensschritt erforderlich.

Aufgabe der Erfindung war es daher, ein Verfahren bereitzustellen, mit welchem die Schüttdichte des sprühgranulierten Produktes schon während der Herstellung in der Granulation erhöht werden kann.

Weitere Aufgabe der vorliegenden Erfindung war es, einen verbesserten und vorzugsweise einen energie-effizienteren Granulationsprozesses bereitzustellen.

Überraschenderweise wurde gefunden, dass durch die Zugabe einer oberflächenaktiven Komponente zu der Fermentationsbrühe vor Durchführung der Sprühtrocknung die erfindungsgemäße Aufgabe gelöst wird, nämlich eine höhere Schüttdichte des Produkts erreicht werden kann und gleichzeitig die Granulationseigenschaften verbessert werden können.

Die beobachteten verbesserten Granulationseigenschaften bestehen insbesondere darin, dass durch die Zugabe der oberflächenaktiven Komponente zu der Fermentationsbrühe vor Durchführung der Sprühtrocknung geringe Restfeuchten mit hohen Sprühraten und geringen Granulatortemperaturen erreicht werden können, was eine schnellere und zugleich energieeffizientere Produktion des Granulats ermöglicht.

Die höhere Schüttdichte des Produkts ist, wie Schnittbilder des Granulats zeigen, auf weniger Hohlräume und eine kompaktere Struktur des Granulats zurückzuführen.

Die kompaktere Struktur des Granulats sowie die realisierbare höhere Sprührate bei der Trocknung der Fermentationsbrühe ist vermutlich auf die nach Zugabe der oberflächenaktiven Substanz erniedrigte Oberflächenspannung und damit vergrößerte Austauschfläche und erhöhte Abdampfrate zurückzuführen.

### Gegenstand der vorliegenden Erfindung

Gegenstand der vorliegenden Erfindung ist daher ein Verfahren zur Herstellung eines L-Aminosäure enthaltenden Futtermitteladditivs auf Fermentationsbrühe-Basis, dadurch gekennzeichnet, dass man eine L-Aminosäure enthaltende Fermentationsbrühe, die einen Wassergehalt von 35 bis 75 Gew.-% und einen Gehalt an oberflächenaktiver Substanz von 0,025 bis 20 Gew.-% aufweist, durch Trocknung in eine partikuläre Zusammensetzung überführt, wobei die Fermentationsbrühe Antischaummittel in einer Menge von 0,025 bis 20 Gew.-% oder Maisquellwasser in einer Menge von 1 bis 10 Gew.-% enthält und wobei das Antischaummittel ausgewählt ist aus Polyglykolen und Phospholipiden und wobei das Maisquellwasser eine Trockenmasse von mindestens 40 Gew.-% und einen Restzuckergehalt von höchstens 2 Gew.-% aufweist.

Gegenstand der vorliegenden Erfindung ist daher ebenso ein Verfahren zur Herstellung eines L-Aminosäure enthaltenden Futtermitteladditivs auf Fermentationsbrühe-Basis, folgende Schritte umfassend
a) Bereitstellung einer L-Aminosäure enthaltenden Fermentationsbrühe,
b) gegebenenfalls Einstellung der L-Aminosäure enthaltenden Fermentationsbrühe auf einen Wassergehalt von 35 bis 70 Gew.-%,
c) Hinzugabe von oberflächenaktiver Substanz zu der Fermentationsbrühe nach Beendigung der Fermentation,
d) Trocknung des erhaltenen Gemisches zu einer partikulären Zusammensetzung, wobei vorzugsweise ein Granulat erhalten wird,
e) gegebenenfalls Partikelgrößeneinstellung, insbesondere durch Walzen, Siebe etc.

Die L-Aminosäure enthaltende Fermentationsbrühe wird vorzugsweise erhalten durch Fermentation eines L-Aminosäure produzierenden Mikroorganismus in einem wässrigen Nährmedium unter aeroben Bedingungen. Erfindungsgemäß bevorzugte Fermentationsverfahren werden weiter unten näher erläutert.

Unter einer Fermentationsbrühe versteht man ein Fermentationsmedium, in dem ein Mikroorganismus für eine gewisse Zeit und bei einer gewissen Temperatur kultiviert wurde. Das Fermentationsmedium beziehungsweise die während der Fermentation eingesetzten Medien enthält/enthalten sämtliche Substanzen beziehungsweise Komponenten, die eine Vermehrung des Mikroorganismus und eine Bildung der gewünschten Aminosäure sicherstellen.

Bei Abschluss der Fermentation enthält die entstandene Fermentationsbrühe dementsprechend die infolge der Vermehrung der Zellen des Mikroorganismus (z.B. coryneformes Bakterium) entstandene Biomasse (= Zellmasse) des Mikroorganismus und die im Laufe der Fermentation gebildete L-Aminosäure (insbesondere L-Lysin), die im Laufe der Fermentation gebildeten organischen Nebenprodukte und die durch die Fermentation nicht verbrauchten Bestandteile des/der eingesetzten Fermentationsmediums/ Fermentationsmedien beziehungsweise der Einsatzstoffe wie beispielsweise Vitamine wie Biotin, Aminosäuren wie Homoserin oder Salze wie Magnesiumsulfat.

Zu den organischen Nebenprodukten gehören Stoffe, die von den bei der Fermentation eingesetzten Mikroorganismen gegebenenfalls neben dem Zielprodukt erzeugt und gegebenenfalls ausgeschieden werden. Hierzu zählen andere L-Aminosäuren, die im Vergleich zur erwünschten L-Aminosäure (insbesondere L-Lysin) weniger als 30 %, 20 % oder 10 % ausmachen. Hierzu gehören weiterhin organische Säuren, die ein bis drei Carboxyl-Gruppen tragen wie zum Beispiel Essigsäure, Milchsäure, Zitronensäure, Apfelsäure oder Fumarsäure. Schließlich gehören dazu auch Zucker wie zum Beispiel Trehalose.

Typische für industrielle Zwecke geeignete Fermentationsbrühen haben einen L-Aminosäuregehalt (insbesondere L-Lysingehalt) von 40 g/kg bis 180 g/kg oder 50 g/kg bis 150 g/kg. Der Gehalt an Biomasse (als getrocknete Biomasse) beträgt im Allgemeinen 20 bis 50 g/kg in der Fermentationsbrühe, bei Biomasse-armer Fermentation kann der Gehalt an Biomasse jedoch auch darunter liegen.

Die Fermentationsbrühe umfasst vorzugsweise eine L-Aminosäure ausgewählt aus L-Lysin, L-Methionin, L-Threonin, L-Valin oder L-Tryptophan. Besonders bevorzugt enthält sie die L-Aminosäure L-Lysin.

In einer erfindungsgemäß besonders bevorzugten Ausführungsform handelt es sich bei der L-Aminosäure um L-Lysin, wobei das Verfahren einen zusätzlichen Verfahrensschritt umfasst, der vor Beginn der Trocknung erfolgt, in welchem Ammoniumsulfat und/oder Schwefelsäure zu der Fermentationsbrühe hinzugegeben wird, um ein Sulfat/L-Aminosäure-Verhältnis von mindestens 0,5, vorzugsweise 0,85 bis 1,2, einzustellen. Diese besonders bevorzugte Ausführungsform wird weiter unten näher ausgeführt.

Die Fermentationsbrühe stellt erfindungsgemäß in einer bevorzugten Ausführungsform das unmittelbare Produkt eines Fermentationsprozesses unter Einsatz L-Aminosäure produzierender Bakterien dar.

Gegebenenfalls kann jedoch vor oder nach Zugabe der oberflächenaktiven Komponente auch die Biomasse teilweise oder vollständig aus der Fermentationsbrühe entfernt werden. In einer erfindungsgemäß bevorzugten Ausführungsform wird vor Durchführung der Trocknung zu einer partikulären Zusammensetzung maximal 80 Gew.-%, besonders bevorzugt maximal 50 Gew.-%, insbesondere maximal 30, 20 oder 10 Gew.-%, der Biomasse entfernt. In einer erfindungsgemäß besonders bevorzugten Ausführungsform bleibt die Biomasse vollständig in der Fermentationsbrühe enthalten.

Die Entfernung der Biomasse kann, sofern gewünscht, insbesondere durch Zentrifugation, Filtration oder Dekantieren oder durch Kombinationen dieser Verfahren erfolgen. In einer erfindungsgemäß bevorzugten Ausführungsform erfolgt die Entfernung der Biomasse durch Ultrafiltration.

Die in der Fermentationsbrühe gelösten organischen Nebenprodukte und die gelösten nicht verbrauchten Bestandteile des Fermentationsmediums (Einsatzstoffe) bleiben mindestens teilweise (> 0 Gew.-%), bevorzugt zu mindestens 25 Gew.-%, besonders bevorzugt zu mindestens 50 Gew.-% und ganz besonders bevorzugt zu mindestens 75 Gew.-% im Produkt. Gegebenenfalls bleiben diese auch vollständig (100 Gew.-%) oder nahezu vollständig das heißt > 95 Gew.-% oder > 98 Gew.-% im Produkt. In diesem Sinne bedeutet der Begriff "auf Fermentationsbrühe-Basis", dass das Produkt mindestens einen Teil der Bestandteile der Fermentationsbrühe enthält.

Die erfindungsgemäß eingesetzte Fermentationsbrühe weist nach Beendigung der Fermentation vorzugsweise folgende Eigenschaften auf:
a) Biomasse-Gehalt von 1 bis 5 Gew.-%, vorzugsweise 2 bis 4,5 Gew.-%, besonders bevorzugt 2,5 bis 3,5 Gew.-%,
b) Gehalt an L-Aminosäure, vorzugsweise L-Lysin, (als Aminosäurebase) von 5 bis 20 Gew.-%,
c) Feststoffgehalt (inklusive Biomasse) von 10 bis 30 Gew.-%, bevorzugt 15 bis 25 Gew.-%,
d) vorzugsweise ein Gew.-%-Verhältnis von Sulfat zu L-Aminosäure, insbesondere L-Lysin, von 0,8 bis 1,2,
e) pH-Wert von 3,5 bis 7,0, bevorzugt von 4,0 bis 5,0.

Die Herstellung einer solchen Fermentationsbrühe wird weiter unten beschrieben.

Unter "Feststoffgehalt" ist erfindungsgemäß die Masse zu verstehen, die bei vollständigem Entzug der Flüssigkeit zurückbleibt. Zu dieser Trockenmasse gehören neben gegebenenfalls suspendierten Substanzen (wie der Biomasse) auch gelöste Substanzen, die erst bei der Trocknung auskristallisieren oder ausfällen. Der Feststoffgehalt ist insofern komplementär zum Wasser- bzw. Feuchtigkeitsgehalt.

Die erfindungsgemäß eingesetzte Fermentationsbrühe kann gegebenenfalls bereits nach Beendigung der Fermentation eine ausreichende Menge an oberflächenaktiver Substanz enthalten. Dies kann dadurch erreicht werden, dass dem Fermentationsmedium bereits vor Beginn der Fermentation eine ausreichende Menge an oberflächenaktiver Substanz hinzugegeben wird oder dadurch, dass während der Fermentation entsprechend oberflächenaktive Substanz hinzugegeben wird.

In einer bevorzugten Ausführungsform enthält die Fermentationsbrühe jedoch nach Beendigung der Fermentation keine oder nur eine relativ geringe Menge an oberflächenaktiver Substanz. Es wird entsprechend nach Beendigung der Fermentation der Fermentationsbrühe die oberflächenaktive Substanz bzw. der Großteil der oberflächenaktiven Substanz hinzugegeben.

Bei der oberflächenaktiven Substanz, die bereits nach Beendigung der Fermentation in der Fermentationsbrühe enthalten ist, kann es sich beispielsweise um ein Antischaummittel handeln.

Die Fermentationsbrühe besitzt vor Beginn der Trocknung vorzugsweise einen Wassergehalt von 35 bis 70 Gew.-%, besonders bevorzugt 35 bis 50 Gew.-%. Die Einstellung dieses Wassergehalts kann, sofern erforderlich, insbesondere durch Eindampfen der Fermentationsbrühe, beispielsweise mit Hilfe eines Rotationsverdampfers, eines Dünnschichtverdampfers oder eines Fallfilmverdampfers, durch Umkehrosmose oder Nanofiltration erfolgen. Durch das Einengen erhöht sich entsprechend auch der Gehalt an Biomasse, der L-Aminosäure-Gehalt und der Gehalt an Feststoff in der Fermentationsbrühe.

Die "oberflächenaktive Substanz" im Sinne der vorliegenden Anmeldung kann ein Reinstoff sein, der ausschließlich aus einer oberflächenaktiven Verbindung besteht. Es kann sich aber auch um ein Gemisch unterschiedlicher oberflächenaktiver Verbindungen handeln. Unter "oberflächenaktiver Substanz" wird erfindungsgemäß jedoch auch eine Komponente verstanden, die eine oberflächenaktive Verbindung oder eine Mischung unterschiedlicher oberflächenaktiver Verbindungen in einer signifikanten Menge enthält. Die oberflächenaktive Verbindung(en) ist/sind hierbei in der Komponente vorzugsweise in einer Menge von mindestens 3 Gew.-%, insbesondere mindestens 5 Gew.-%, besonders bevorzugt mindestens 10 Gew.-% enthalten. In einer bevorzugten Ausführungsform ist/sind die oberflächenaktive(n) Verbindung(en) in der Komponente zu mindestens 20 Gew.-%, vorzugsweise zu mindestens 25 Gew.-%, insbesondere zu mindestens 40 Gew.-%, enthalten.

Die oberflächenaktive Substanz ist erfindungsgemäß vorzugsweise ausgewählt aus der Gruppe bestehend aus Maisquellwasser, Lipiden, Antischaummitteln und Tensiden sowie Mischungen davon.

Das Antischaummittel ist vorzugsweise ausgewählt aus Polysiloxanderivaten, Mono- und Polyglykolen, Phospholipiden sowie Fettsäure-Glyceriden.

Bei dem Polysiloxanderivat kann es sich insbesondere um ein Polyalkylsiloxan, vor allem um ein Polydimethylsiloxan, handeln.

Bei dem Polyglykol handelt es sich vorzugsweise um ein Polymer aus Oxyethylen- und/oder Oxypropylen-Einheiten, vorzugsweise um ein Mischpolymer aus Oxyethylen- und Oxypropylen-Einheiten, oder um eine Verbindung, die Oxyethylen- und/oder Oxypropylen-Einheiten umfasst, wie beispielsweise ein Fettsäurealkylpolyglycolester.

Bei dem Phospholipid handelt es sich vorzugsweise um ein Phosphatidylcholin (Lecithin).

Bei dem Fettsäure-Glycerid kann es sich insbesondere um ein Mono- oder Diglycerid handeln, vor allem um ein Mono- oder Diglycerid, bei welchem der Säure-Rest ausgewählt ist aus Essigsäure, Milchsäure, Citronensäure, Weinsäure und Mischungen davon.

Das erfindungsgemäß eingesetzte Maisquellwasser besitzt vorzugsweise eine Trockenmasse von mindestens 40 Gew.-%, vorzugsweise 45 bis 55 Gew.-%, und weist vorzugsweise einen Restzuckergehalt von höchstens 2 Gew.-% auf. Maisquellwasser enthält als oberflächenaktiven Bestandteil Phosphatidylcholin.

Das erfindungsgemäß einsetzbare Lipid ist vorzugsweise ausgewählt aus Mineralölen, Pflanzenölen und Mischungen davon. Besonders bevorzugt wird als Öl Sojabohnenöl, Olivenöl, Silikonöl oder Mischungen davon eingesetzt.

In einer erfindungsgemäß besonders bevorzugten Ausführungsform wird als oberflächenaktive Substanz Phosphatidylcholin oder eine Phosphatidylcholin-haltige Komponente, vorzugsweise Maisquellwasser, eingesetzt.

Die oberflächenaktive Substanz ist in der Fermentationsbrühe vor Beginn der Trocknung vorzugsweise in einer Menge von 0,025 bis 20 Gew.-%, 0,1 bis 20 Gew.-%, 0,2 bis 20 Gew.-%, 0,5 bis 20 Gew.-% oder 1 bis 20 Gew.-% enthalten. Bevorzugte Bereiche sind hierbei 0,2 bis 15 Gew.-%, 0,3 bis 15 Gew.-%, 0,5 bis 15 Gew.-% sowie 1 bis 10 Gew.-%.

Sofern als oberflächenaktive Substanz ein Polyglykol, insbesondere ein Fettsäurealkylpolyglycolester, oder ein Phospholipid, insbesondere ein Lecithin, oder Mischungen davon, eingesetzt werden, wird vorzugsweise eine Konzentration an oberflächenaktiver Substanz von 0,1 bis 5 Gew.-%, insbesondere 0,2 bis 4 Gew.-%, vorzugsweise 0,25 bis 2 Gew.-%, eingestellt.

Diese Einsatzmenge an oberflächenaktiver Substanz ist generell bevorzugt, sofern es sich bei der oberflächenaktiven Substanz um eine Komponente handelt, die mindestens 50 Gew.-%, insbesondere mindestens 70 Gew.-%, an oberflächenaktiven Verbindungen enthält.

Sofern als oberflächenaktive Substanz Maisquellwasser, gegebenenfalls in Kombination mit anderen oberflächenaktiven Substanzen, eingesetzt wird, wird vorzugsweise eine Konzentration an oberflächenaktiver Substanz von 0,1 bis 10 Gew.-%, insbesondere 0,5 bis 5 Gew.-%, vorzugsweise 1 bis 3 Gew.-%, eingestellt.

Diese Einsatzmenge an oberflächenaktiver Substanz ist generell bevorzugt, sofern es sich bei der oberflächenaktiven Substanz um eine Komponente handelt, die weniger als 30 Gew.-%, insbesondere 3 bis 30 oder 3 bis 20 Gew.-%, an oberflächenaktiven Verbindungen enthält.

In einer erfindungsgemäß bevorzugten Ausführungsform weist die Fermentationsbrühe vor Beginn der Trocknung folgende Eigenschaften auf:
a) Biomasse-Gehalt von 2 bis 12 Gew.-%, vorzugsweise 3 bis 10 Gew.-%, insbesondere 4 bis 8 Gew.-%;
b) Gehalt an L-Aminosäure, vorzugsweise L-Lysin, (als Aminosäurebase) von 12 bis 48 Gew.-%, insbesondere 20 bis 40 Gew.-%;
c) Feststoffgehalt (inklusive Biomasse) von 25 bis 70 Gew.-%, bevorzugt 35 bis 60 Gew.-%;
d) Gehalt an oberflächenaktiver Substanz von 0,025 bis 20 Gew.-%, insbesondere 0,1 bis 20 Gew.-%, vorzugsweise 0,3 bis 15 Gew.-%;
e) Gew.-%-Verhältnis von Sulfat zu L-Aminosäure, insbesondere L-Lysin, von 0,8 bis 1,2;
f) pH-Wert von 3,5 bis 7,0, bevorzugt von 4,0 bis 5,0.

Zur Einstellung einer gewünschten L-Aminosäure-Konzentration im Produkt kann je nach Anforderung zwecks Erhöhung oder Herabsetzung des L-Aminosäuregehalts ein Additiv zur bereitgestellten oder eingeengten Fermentationsbrühe hinzugegeben werden. Das Additiv kann alternativ und/oder zusätzlich auch während des Trocknungs- oder Granulationsprozesses hinzugefügt werden.

Um den Gehalt an L-Aminosäure zu erhöhen wird vorzugsweise die betreffende L-Aminosäure in Form eines Konzentrates oder gegebenenfalls einer weitgehend reinen Substanz beziehungsweise deren Salz in flüssiger oder fester Form hinzugefügt. Um den L-Aminosäuregehalt zu reduzieren wird vorzugsweise Ammoniumsulfat hinzugefügt. Das Additiv wird, sofern eingesetzt, vorzugsweise in einer Menge von 0,1 bis 10 Gew.-%, vorzugsweise 0,1 bis 5 Gew.-%, zu der Fermentationsbrühe hinzugegeben bzw. bevorzugt in einer Menge hinzugegeben, dass sich im finalen Produkt eine L-Aminosäure-Konzentration von 40 bis 60 Gew.-%, insbesondere 45 bis 55 Gew.-%, einstellt.

Die Trocknung zu einer partikulären Zusammensetzung kann insbesondere durch Gefriertrocknung, vorzugsweise durch ein Sprühverfahren, insbesondere Sprühtrocknung oder Sprühgranulation, erfolgen.

An die erfindungsgemäß durchzuführende Trocknung der Fermentationsbrühe können sich gegebenenfalls weitere Prozessierungsschritte, insbesondere ein oder mehrere Granulierschritte, anschließen, insbesondere, wenn bei der Trocknung nicht unmittelbar ein Granulat erhalten wird.

In einer erfindungsgemäß besonders bevorzugten Ausführungsform wird die Fermentationsbrühe jedoch unmittelbar in einem Verfahrensschritt in ein Granulat überführt, so dass eine anschließende Granulation nicht erforderlich ist. Die unmittelbare Überführung in ein Granulat erfolgt vorzugsweise durch ein Sprühgranulationsverfahren, besonders bevorzugt unter Anwendung eines Sprühgranulationsverfahrens unter Einsatz einer zirkulierenden Wirbelschicht wie in der Offenlegungsschrift WO 2005/006875 beschrieben.

In der Sprühgranulation erfolgt vorzugsweise eine vollständige oder zumindest teilweise Rückführung von stromabwärts entstehendem Staub der Granulation in die Sprühgranulationskammer.

Weiterhin wird vorzugsweise die Granulationstemperatur so geregelt, dass die Eingangstemperatur 200 bis 300°C, vorzugsweise 250 bis 275°C und die Ausgangstemperatur 60 bis 100°C, vorzugsweise 70 bis 90°C beträgt.

Das erhältliche Granulat hat vorzugsweise einen L-Aminosäure-Gehalt von 40 bis 60 Gew.-%, insbesondere 45 bis 55 Gew.-%, besonders bevorzugt 48 bis 52 Gew.-%, und einen Wassergehalt (Restfeuchte) von maximal 5 Gew.-%, vorzugsweise maximal 3,5 Gew.-%.

Durch die Trocknung wird eine partikuläre Zusammensetzung erhalten, die vorzugsweise rieselfähig ist sowie feinteilig oder grobkörnig sein kann.

Das rieselfähige, feinteilige Pulver kann wiederum durch geeignete Kompaktier- oder Granulierverfahren in ein grobkörniges, gut rieselfähiges, lagerbares und weitgehend staubfreies Produkt überführt werden.

Die Granulate sind z.B. herstellbar nach den Verfahren gemäß EP-B 0 615 693 oder EP-B 0 809 940, US 5 840 358 oder WO 2005/006875 oder WO 2004/054381.

Unter "rieselfähig" versteht man Pulver, die aus einer Serie von Glasauslaufgefäßen mit verschieden großen Auslauföffnungen mindestens aus dem Gefäß mit der Öffnung 5 mm (Millimeter) ungehindert auslaufen (Klein: Seifen, Öle, Fette, Wachse 94, 12 (1968)).

Weiterer Gegenstand der vorliegenden Erfindung sind körnige Futtermitteladditive, folgende Merkmale umfassend:
a) Gehalt an L-Aminosäure, vorzugsweise L-Lysin, (gerechnet auf die Aminosäurebase) von mindestens 20 Gew.-%, vorzugsweise 25 bis 60 Gew.-%, insbesondere 30 bis 60 oder 40 bis 60 Gew.-%, besonders bevorzugt 45 bis 55 Gew.-%,
b) mittlerer Korngrößendurchmesser von 60 bis 2500 µm, vorzugsweise 60 bis 1500 µm;
c) Biomassegehalt von mindestens 3 oder 4 Gew.-%, vorzugsweise mindestens 5 oder 6 Gew.-%, besonders bevorzugt mindestens 7 Gew.-%, insbesondere von 3 bis 12 Gew.-%, 4 bis 12 Gew.-%, 5 bis 12 Gew.-%, 6 bis 12 Gew.-% oder 7 bis 12 Gew.-%;
d) Gehalt an oberflächenaktiver Substanz von 0,04 bis 35 Gew.-%, vorzugsweise 0,15 bis 30 Gew.-%, besonders bevorzugt 0,5 bis 15 Gew.-%, wobei Antischaummittel in einer Menge von 0,04 bis 35 Gew.-% oder Maisquellwasser in einer Menge von 3 bis 25 Gew.-% enthalten ist und das Antischaummittel ausgewählt ist aus Polyglykolen und Phospholipiden und das Maisquellwasser eine Trockenmasse von mindestens 40 Gew.-% und einen Restzuckergehalt von höchstens 2 Gew.-% aufweist;
e) vorzugsweise einen Wassergehalt (Restfeuchte) von maximal 4,5 Gew.-%, insbesondere maximal 3,5 Gew.-%;
f) vorzugsweise eine das Korn umgebende Schicht aus essbarem Öl.

Bei dem angegebenen mittleren Korngrößendurchmesser handelt es sich hierbei um das arithmetische Mittel.

Bevorzugte erfindungsgemäße Futtermitteladditive besitzen einen Anteil an Partikeln von >= 70, 75, 80, 90, 95, 97 Gew.-% einer Korngröße von > 63 µm bis < 2500 µm oder einem Anteil von >= 70, 75, 80, 85, 90, 95, 97 Gew.-% einer Korngröße von > 63 bis < 2000 µm oder einem Anteil von >= 70, 75, 80, 85, 90, 95, 97 Gew.-% einer Korngröße von >100 bis < 1700 µm Durchmesser. Der Anteil an Staub d.h. Partikeln mit einer Korngröße < 63 µm liegt bevorzugt bei 20 Gew.-% oder weniger, 15 Gew.-% oder weniger, 10 Gew.-% oder weniger, 5 Gew.-% oder weniger, 3 Gew.-% oder weniger, 2 Gew.-%, 0 bis 1 Gew.-%, 0,5 Gew.-% oder weniger.

Besonders bevorzugt weisen mindestens 75 Gew.-% der Partikel der erhaltenen Zusammensetzung einen Korngrößendurchmesser von >63 µm bis < 2500 µm, vorzugsweise von > 63 µm bis < 2000 µm, auf, wobei vorzugsweise der Anteil der Partikel mit einem Korngrößendurchmesser von < 63 µm 20 Gew.-% oder weniger beträgt.

Das Schüttgewicht der bevorzugten Produkte beträgt im Allgemeinen 600 bis 800 kg/m³.

Die Partikelgrößenverteilung wird vorzugsweise mittels Siebanalyse in einer Luftstrahlsiebmaschine Hosokawa Alpine, Typ 200 LS-N, gemessen (Siebsatz: Maschenweiten 20, 32, 45, 63, 100, 150, 200, 250, 280, 300, 400, 500, 600, 630, 710, 800, 1000, 1180, 1400, 1600 und 2000 µm; Siebung: 3 min.).

Alternativ kann die Partikelgröße beispielsweise auch durch Laserbeugungsspektrometrie ermittelt werden. Anwendbare Methoden sind im Lehrbuch "Teilchengrößenmessung in der Laborpraxis" von R.H. Müller und R. Schuhmann, Wissenschaftliche Verlagsgesellschaft Stuttgart (1996) sowie im Lehrbuch "Introduction to Particle Technology" von M. Rhodes, Verlag Wiley & Sons (1998) beschrieben.

Vorteilhaft bei der Granulation oder Kompaktierung ist der Einsatz von üblichen organischen oder anorganischen Hilfsstoffen, beziehungsweise Trägern wie Stärke, Gelatine, Cellulosederivaten oder ähnlichen Stoffen, wie sie üblicherweise in der Lebensmittel- oder Futterverarbeitung als Binde-, Gelier-, oder Verdickungsmittel Verwendung finden, oder von weiteren Stoffen wie zum Beispiel Kieselsäuren, Silikaten (EP-A 0 743 016) oder Stearaten.

Gegebenenfalls wird aus der erhaltenen partikulären Zusammensetzung bzw. dem erhaltenen Granulat durch Sieben, Walzen, Staubtrennung, Vermahlung oder Kombinationen davon ein Produkt mit der gewünschten Korngröße erhalten.

Erfindungsgemäße körnige Futtermitteladditive zeichnen sich vorzugsweise weiterhin dadurch aus, dass sie mit einem Öl beschichtet sind, wie beispielsweise in der WO 04/054381 beschrieben, wobei das Öl vorzugsweise ausgewählt ist aus pflanzlichem Öl (insbesondere Olivenöl, Sonnenblumenöl, Sojaöl oder Sojaöl/Lecithingemische), tierischem Öl oder Fett und von Mikroorganismen durch Fermentation erzeugtem Öl. Durch die Behandlung der Oberflächen mit den genannten Ölen erzielt man eine erhöhte Abriebfestigkeit des Produktes und eine Verringerung des Staubanteils.

Alternativ kann das Produkt aber auch auf einen in der Futtermittelverarbeitung bekannten und üblichen organischen oder anorganischen Trägerstoff wie zum Beispiel Kieselsäuren, Silikate, Schrote, Kleien, Mehle, Stärken, Zucker oder andere aufgezogen und/oder mit üblichen Verdickungs- oder Bindemitteln vermischt und stabilisiert werden. Anwendungsbeispiele und Verfahren hierzu sind in der Literatur (Die Mühle + Mischfuttertechnik 132 (1995) 49, Seite 817) beschrieben.

Schließlich kann das Produkt auch durch Beschichtungsverfahren ("Coating") mit Filmbildnern wie beispielsweise Metallcarbonate, Kieselsäuren, Silikate, Alginate, Stearate, Stärken, Gummis und Celluloseether, wie in der DE-C 41 00 920 beschrieben, veredelt werden.

Die Biomasse in erfindungsgemäßen Futtermitteladditiven umfasst vorzugsweise Bakterien der Gattung Corynebacterium oder der Gattung Escherichia und/oder Zelltrümmer dieser Bakterien und besteht besonders bevorzugt im Wesentlichen daraus.

Der Gehalt an L-Aminosäure in erfindungsgemäßen Futtermitteladditiven beträgt vorzugsweise mindestens 30 Gew.-%, vorzugsweise mindestens 40 Gew.-%, insbesondere 40 bis 60 Gew.-%, besonders bevorzugt 45 bis 55 Gew.-%.

Die L-Aminosäure in den erfindungsgemäßen Futtermitteladditiven ist vorzugsweise ausgewählt aus der Gruppe bestehend aus L-Lysin, L-Methionin, L-Threonin, L-Tryptophan und L-Valin sowie Mischungen davon, besonders bevorzugt handelt es sich bei der L-Aminosäure um L-Lysin.

Bei dem erfindungsgemäßen Futtermitteladditiv handelt es sich vorzugsweise um ein Futtermitteladditiv auf Fermentationsbrühe-Basis.

Die in erfindungsgemäßen körnigen Futtermitteladditiven enthaltene oberflächenaktive Substanz ist vorzugsweise ausgewählt aus den zuvor genannten oberflächenaktiven Substanzen. Das Futtermitteladditiv enthält jedoch zwingend Antischaummittel in einer Menge von 0,04 bis 35 Gew.-% oder Maisquellwasser in einer Menge von 3 bis 25 Gew.-%, wobei das Antischaummittel ausgewählt ist aus Polyglykolen und Phospholipiden und wobei das Maisquellwasser eine Trockenmasse von mindestens 40 Gew.-% und einen Restzuckergehalt von höchstens 2 Gew.-% aufweist.

Sofern es sich bei der oberflächenaktiven Substanz um ein Polyglykol, insbesondere ein Fettsäurealkylpolyglycolester, oder ein Phospholipid, insbesondere ein Lecithin, oder Mischungen davon, handelt, ist die oberflächenaktive Substanz im Futtermitteladditiv in einer Menge von 0,15 bis 10 Gew.-%, insbesondere 0,3 bis 6 Gew.-%, besonders bevorzugt 0,4 bis 4 Gew.-%, enthalten.

Sofern es sich bei der oberflächenaktiven Substanz um Maisquellwasser, gegebenenfalls in Kombination mit anderen oberflächenaktiven Substanzen, handelt, ist die oberflächenaktive Substanz im Futtermitteladditiv in einer Menge von 3 bis 25 Gew.-%, besonders bevorzugt 6 bis 20 Gew.-%, enthalten.

Die Verteilung der oberflächenaktiven Substanz im Korn ist vorzugsweise homogen, wobei unter "homogen" zu verstehen ist, dass zwischen zwei beliebigen Fraktionen des Korns kein großer Konzentrationsunterschied der oberflächenaktiven Substanz anzutreffen ist.

Vorzugsweise beträgt die Abweichung der Menge der oberflächenaktiven Substanz in zwei beliebigen Fraktionen des Korns, bei denen es sich beispielsweise um beliebige Kuben mit einem Volumen von 10 x 10 µm handeln kann, maximal 30 %, vorzugsweise maximal 25 oder 20 %, besonders bevorzugt maximal 10, 5 oder 3 %.

Die homogene Verteilung der oberflächenaktiven Substanz wird durch die Weise der Herstellung des Futtermitteladditivs sichergestellt.

Die Partikeldichte des Futtermitteladditivs beträgt vorzugsweise mindestens 1,138 g/cm³, besonders bevorzugt mindestens 1,140 g/cm³, vor allem mindestens 1,142 oder 1,144 g/cm³. Bevorzugte Bereiche sind hierbei 1,138 bis 1,160 g/cm³, insbesondere 1,140 bis 1,155 g/cm³, vor allem 1,142 bis 1,154 g/cm³ oder 1,144 bis 1,152 g/cm³.

Die Schüttdichte des Futtermitteladditivs beträgt vorzugsweise mindestens 600 kg/m³, insbesondere 600 bis 800 kg/m³.

Die Schüttdichte wird vorzugsweise wie folgt bestimmt: Ein leerer Standzylinder (250 ml Volumen) wird auf einer Waage platziert, mit dem körnigen Produkt befüllt und anschließend das Gewicht pro Volumeneinheit ermittelt.

Zur Ermittlung der Partikeldichte werden die Leerräume im Standzylinder mit Methanol aufgefüllt. Das Lückenvolumen kann so aufgrund der Gewichtszunahme und der bekannten Dichte des Methanols (0,7918 g/ml) ermittelt werden. Aus der Differenz zwischen Gesamtvolumen und Volumen des Methanols ergibt sich so das Volumen der Partikel. Die Partikeldichte ergibt sich dann dadurch, indem man das zuvor ermittelte Gewicht der Partikel nicht auf das Gesamtvolumen des Messzylinders bezieht, sondern auf das ermittelte Volumen der Partikel.

Alternativ kann die Partikeldichte auch unter Verwendung eines Pyknometers ermittelt werden. Die Bestimmung der Partikeldichte erfolgt hierbei durch Gasverdrängung. Vorzugsweise werden inerte Gase wie Helium oder Stickstoff als Verdrängungsmedium eingesetzt. Ein im Handel erhältliches Pyknometer stellt hierbei beispielsweise das Helium-Pyknometer AccuPyc 1340 (mimetrics) dar.

Erfindungsgemäße körnige Futtermitteladditive zeichnen sich vorzugsweise dadurch aus, dass sie die L-Aminosäure L-Lysin enthalten, wobei diese vorzugsweise zumindest teilweise als Sulfatsalz vorliegt, wobei das molare Verhältnis von Sulfat zu L-Lysin vorzugsweise mindestens 0,5, besonders bevorzugt 0,8 bis 1,2 beträgt.

In der bevorzugten Ausführungsform, in welcher es sich bei der L-Aminosäure um L-Lysin handelt, haben erfindungsgemäße Futtermitteladditive vorzugsweise einen pH-Wert von 3,5 bis 6,5, insbesondere 4,0 bis 5,0, bevorzugt 4,2 bis 4,8, gemessen in wässriger Suspension. Für die pH-Messung wird eine 10 Gew.-%ige Suspension in entionisiertem Wasser hergestellt und der pH bei 25°C mit einer pH-Elektrode gemessen. Der Messwert stellt sich nach ca. 1 Minute konstant ein.

Vorzugsweise liegt der Wassergehalt erfindungsgemäßer Futtermitteladditive zwischen 0,1 Gew.-% und maximal 5 Gew.-%. Der Wassergehalt beträgt bevorzugt maximal 4% Gew.-%, besonders bevorzugt maximal 3% Gew.-% und ganz besonders bevorzugt maximal 2,5 Gew.-%. Wassergehalte von maximal 2 Gew.-% sind ebenfalls möglich.

Erfindungsgemäße Futtermitteladditive zeichnen sich vorzugsweise weiterhin dadurch aus, dass sie eine sehr kompakte Struktur aufweisen, wobei unter "kompakter Struktur" zu verstehen ist, dass sie relativ wenig Hohlräume aufweisen. Dies ist nicht zuletzt auf den Einsatz der oberflächenaktiven Substanz zurückzuführen. Erfindungsgemäße Futtermitteladditive zeichnen sich vorzugsweise dadurch aus, dass sie weniger als 25 Vol.-%, insbesondere weniger als 20 Vol.-%, besonders bevorzugt weniger als 15 Vol.-%, vor allem weniger als 10 Vol.-%, Hohlräume aufweisen.

Weiterer Gegenstand der vorliegenden Erfindung ist die Verwendung eines erfindungsgemäßen körnigen Futtermitteladditivs zur Herstellung von Futtermitteln.

### Herstellung der L-Aminosäure enthaltenden Fermentationsbrühe

Die fermentative Herstellung von L-Aminosäuren, wie L-Lysin, L-Methionin, L-Threonin, L-Tryptophan, L-Valin, insbesondere L-Lysin wird durch fermentative Kultivierung eines Aminosäure überproduzierenden Bakterienstammes erreicht. Die Fermentation erfolgt bevorzugt mit coryneformen Bakterien, insbesondere der Gattung *Corynebacterium,* besonders bevorzugt der Art *Corynebacterium glutamicum,* und /oder der Gattung *Escherichia,* besonders bevorzugt der Art *Escherichia coli,* durch ein sogenanntes fed-batch Verfahren (Zulaufverfahren). Alternativ kann auch kontinuierlich oder diskontinuierlich im batch-Verfahren (Satzkultivierung) oder repeated-fed-batch Verfahren (repetitives Zulaufverfahren) die Fermentation mit dem Ziel der Produktion von L-Aminosäuren (insbesondere L-Lysin) durchgeführt werden. Das verwendete Fermentationsmedium ist an die Ansprüche der jeweiligen Produktionsstämme optimiert. Eine Zusammenfassung allgemeiner Art über bekannte Kultivierungsmethoden ist im Lehrbuch von Chmiel (Bioprozesstechnik 1. Einführung in die Bioverfahrenstechnik (Gustav Fischer Verlag, Stuttgart, 1991)) oder im Lehrbuch von Storhas (Bioreaktoren und periphere Einrichtungen (Vieweg Verlag, Braunschweig/ Wiesbaden, 1994)) verfügbar.

Das zu verwendende Kulturmedium beziehungsweise Fermentationsmedium muss in geeigneter Weise den Ansprüchen der jeweiligen Stämme genügen. Beschreibungen von Kulturmedien verschiedener Mikroorganismen sind im Handbuch "Manual of Methods for General Bacteriology", der American Society for Bacteriology (Washington D. C, USA, 1981) enthalten. Die Begriffe Kulturmedium und Fermentationsmedium beziehungsweise Medium sind gegenseitig austauschbar.

Als Kohlenstoffquelle können Zucker und Kohlehydrate wie z.B. Glucose, Saccharose, Laktose, Fructose, Maltose, Melasse, Saccharose-haltige Lösungen aus der Zuckerrüben- oder Zuckerrohrherstellung, Stärke, Stärkehydrolysat und Cellulose, Öle und Fette, wie zum Beispiel Sojaöl, Sonnenblumenöl, Erdnussöl und Kokosfett, Fettsäuren, wie zum Beispiel Palmitinsäure, Stearinsäure und Linolsäure, Alkohole wie zum Beispiel Glycerin, Methanol und Ethanol und organische Säuren, wie zum Beispiel Essigsäure verwendet werden. Diese Stoffe können einzeln oder als Mischung verwendet werden.

Als Stickstoffquelle können organische Stickstoff-haltige Verbindungen wie Peptone, Hefeextrakt, Fleischextrakt, Malzextrakt, Maisquellwasser, Sojabohnenmehl und Harnstoff oder anorganische Verbindungen wie Ammoniak, Ammoniumsulfat, Ammoniumphosphat, Ammoniumcarbonat und Ammoniumnitrat, bevorzugt Ammoniak oder Ammoniumsulfat verwendet werden. Die Stickstoffquellen können einzeln oder als Mischung verwendet werden.

Als Phosphorquelle können Phosphorsäure, Kaliumdihydrogenphosphat oder Dikaliumhydrogenphosphat oder die entsprechenden Natrium-haltigen Salze verwendet werden.

Das Kulturmedium muss weiterhin Salze beispielsweise in Form von Sulfaten von Metallen wie beispielsweise Natrium, Kalium, Magnesium, Calcium und Eisen enthalten, wie zum Beispiel Magnesiumsulfat oder Eisensulfat, die für das Wachstum notwendig sind. Schließlich können essentielle Wuchsstoffe wie Aminosäuren, beispielsweise Homoserin, und Vitamine, beispielsweise Thiamin, Biotin oder Pantothensäure, zusätzlich zu den oben genannten Stoffen eingesetzt werden. Dem Kulturmedium können überdies geeignete Vorstufen der jeweiligen Aminosäure zugesetzt werden. Die genannten Einsatzstoffe können zur Kultur in Form eines einmaligen Ansatzes hinzugegeben oder in geeigneter Weise während der Kultivierung zugefüttert werden.

Zur pH-Kontrolle der Kultur werden basische Verbindungen wie Natriumhydroxid, Kaliumhydroxid, Ammoniak beziehungsweise Ammoniakwasser bevorzugt Ammoniak oder Ammoniakwasser oder saure Verbindungen wie Phosphorsäure oder Schwefelsäure in geeigneter Weise eingesetzt. Der pH wird im Allgemeinen auf einen Wert von 6,0 bis 9,0 vorzugsweise 6,5 bis 8 eingestellt.

Zur Kontrolle der Schaumentwicklung können Antischäummittel, wie zum Beispiel Fettsäurepolyglykolester eingesetzt werden. Zur Aufrechterhaltung der Stabilität von Plasmiden können dem Medium gegebenenfalls geeignete selektiv wirkende Stoffe, wie zum Beispiel Antibiotika hinzugefugt werden. Um aerobe Bedingungen aufrechtzuerhalten, werden Sauerstoff oder Sauerstoff-haltige Gasmischungen, wie zum Beispiel Luft in die Kultur eingetragen. Die Verwendung von Flüssigkeiten, die mit Wasserstoffperoxid angereichert sind, ist ebenfalls möglich.

Gegebenenfalls wird die Fermentation bei Überdruck, beispielsweise bei einem Druck von 0,03 bis 0,2 MPa, gefahren. Die Temperatur der Kultur liegt normalerweise bei 20 °C bis 45 °C und vorzugsweise bei 25 °C bis 40 °C. Bei batch-Verfahren wird die Kultivierung solange fortgesetzt, bis sich ein Maximum der gewünschten Aminosäure gebildet hat. Dieses Ziel wird normalerweise innerhalb von 10 Stunden bis 160 Stunden erreicht. Bei kontinuierlichen Verfahren sind längere Kultivierungszeiten möglich. Um entsprechend große Produktionsfermentervolumina von mehreren hundert Kubikmetern zu fermentieren sind mehrere vorgeschaltete Anzuchtfermenterschritte mit sukzessive zunehmendem Kesselvolumen notwendig.

Beispiele für geeignete Fermentationsmedien finden sich unter anderem in den Patentschriften US 5,770,409, US 5,840,551 und US 5,990,350, US 5,275,940 oder US 4,275,157. Weitere Beispiele für Fermentationsmedien finden sich bei Ozaki und Shiio (Agricultural and Biological Chemistry 47(7), 1569-1576, 1983) und Shiio et al. (Agricultural and Biological Chemistry 48(6), 1551-1558, 1984). Methoden zur Bestimmung von L-Lysin und anderer L-Aminosäuren sind aus dem Stand der Technik bekannt. Die Analyse kann zum Beispiel so wie bei Spackman et al. (Analytical Chemistry, 30, (1958), 1190) beschrieben durch Anionenaustausch-Chromatographie mit anschließender Ninhydrin-Derivatisierung erfolgen, oder sie kann durch reversed phase HPLC erfolgen, so wie bei Lindroth et al. (Analytical Chemistry (1979) 51: 1167-1174) beschrieben.

Die auf diese Weise hergestellte Fermentationsbrühe wird anschließend erfindungsgemäß weiterverarbeitet.

Die Biomasse beziehungsweise die Biomasse enthaltene Fermentationsbrühe wird vorzugsweise während eines geeigneten Verfahrensschrittes thermisch inaktiviert, bevor die Biomasse vollständig oder teilweise entfernt wird.

### Bevorzugte Verfahrensdurchführung bei der Produktion von L-Lysin

Im Falle, dass die produzierte L-Aminosäure L-Lysin ist, wird, wie bereits zuvor erwähnt, vorzugsweise ein zusätzlicher Verfahrensschritt durchgeführt, der vor Beginn der Trocknung erfolgt, in welchem Ammoniumsulfat und/oder Schwefelsäure zu der Fermentationsbrühe hinzugegeben werden, um ein molares Sulfat/L-Aminosäure-Verhältnis von mindestens 0,5 einzustellen. Das molare Sulfat/L-Lysin-Verhältnis beträgt hierbei bevorzugt mindestens 0,6, 0,8, 0,9 oder 0,95, insbesondere 0,85 bis 1,2 , vorzugsweise 0,9 bis 1,1, besonders bevorzugt >0,95 bis <1,1.

Das molare Sulfat/L-Lysin-Verhältnis V wird nach der Formel: V = 2 x [SO4²⁻] / [L-Lysin] berechnet.

Diese Formel berücksichtigt die Tatsache, dass das Sulfat-Anion zweiwertig ist. Ein Verhältnis V = 1 bedeutet, dass ein stöchiometrisch zusammengesetztes Lys₂(SO₄) vorliegt, während bei einem Verhältnis von V = 0,9 ein 10%iger Sulfatunterschuss und bei einem Verhältnis von V = 1,1 ein 10%iger Sulfatüberschuss gefunden wird.

Es ist alternativ möglich, die Fermentation in Gegenwart einer solchen Menge von Ammoniumsulfat durchzuführen, dass nach Beendigung der Fermentation bereits ein Sulfat/L-Aminosäure-Verhältnis vorliegt, das im erfindungsgemäß bevorzugten Bereich liegt. In diesem Fall kann auf den zusätzlichen Verfahrensschritt verzichtet werden.

Schließlich kann die Brühe auch mit bevorzugt Natriumbisulfit (Natriumhydrogensulfit) oder einem anderen Salz, beispielsweise Ammonium-, Alkali- oder Erdalkalisalz der schwefligen Säure, versetzt werden, was zur Stabilisierung und Aufhellung des Produktes führt.

In diesem Sinne umfasst ein erfindungsgemäß besonders bevorzugtes Verfahren folgende Schritte:
- Bereitstellung einer L-Lysin enthaltenden Fermentationsbrühe;
- gegebenenfalls teilweise oder vollständige Entfernung der Biomasse;
- gegebenenfalls Messen des Verhältnisses von Sulfat zu L-Lysin;
- anschließend gegebenenfalls Zusetzen von Ammoniumsulfat und/oder Maisquellwasser;
- gegebenenfalls Zusetzen von Schwefelsäure;
- Einstellen des pH-Wertes durch Zugabe von Schwefelsäure auf 4,0 bis 6,5, insbesondere 4,9 bis 5,1, wobei durch die Zugabe der Sulfat-haltigen Verbindung in den vorgenannten Schritten ein Sulfat/L-Aminosäure-Verhältnis von 0,85 bis 1,2, bevorzugt 0,9 bis 1,0 besonders bevorzugt >0,9 bis <0,95 in der Brühe eingestellt wird;
- gegebenenfalls Einengung der Fermentationsbrühe auf einen Wassergehalt von 35 bis 70 Gew.-%, insbesondere 35 bis 50 Gew.-%;
- Zugabe einer oberflächenaktiven Komponente, so dass sich ein Gehalt an oberflächenaktiver Komponente von 0,025 bis 20 Gew.-%, insbesondere 0,1 bis 20 Gew.-%, vorzugsweise 0,2 bis 15 Gew.-%, besonders bevorzugt 0,3 bis 10 Gew.-%, einstellt;
- Trocknung des Gemisches zu einer partikulären Zusammensetzung, vorzugsweise durch Sprühgranulation;
- Gegebenenfalls Beschichten der Partikel nach Schritt mit einem genießbaren Öl, wobei Partikel erhalten werden, die ganz oder teilweise mit dem genießbaren beschichtet sind.

Unter Sulfat-haltigen Verbindungen im Sinne der oben genannten Verfahrensschritte sind insbesondere Ammoniumsulfat und Schwefelsäure gemeint. Auf diese Weise erhält man ein Produkt mit einem L-Aminosäure-Gehalt (insbesondere L-Lysin) von 10 bis 70 Gew.-% (berechnet als Aminosäure, bezogen auf die Gesamtmenge) und im Falle, dass die L-Aminosäure L-Lysin ist, liegt L-Lysin in einem molaren Sulfat/L-Lysin-Verhältnis von mindestens 0,5, bevorzugt 0,6, 0,8, 0,9, 0,95, 1,0, 1,05, 1,1, 1,2, weiter bevorzugt von 0,85 bis 1,2 , bevorzugt 0,9 bis 1,1, besonders bevorzugt >0,95 bis <1,1 vor.

Wird über die erfindungsgemäße pH-Wertabsenkung hinaus Säure zugesetzt, sind wegen der Pufferwirkung der in der Brühe enthaltenen Verbindungen erhöhte Mengen an Säure erforderlich, die dann zu einer unerwünschten Denaturierung und Auflösung der Zellen der coryneformen Bakterien führen können.

In einer erfindungsgemäßen Verfahrensvariante wird der Fermentationsbrühe eines oder mehrerer der Salze der schwefeligen Säure (Sulfite) ausgewählt aus der Gruppe Ammonium-, Alkali-, und Erdalkalisalz in einer Menge von 0,01 bis 0,5 Gew.-%, bevorzugt 0,1 bis 0,3 Gew.-%, besonders bevorzugt 0,1 bis 0,2 Gew.-%, bezogen auf die Fermentationsbrühe zugesetzt. Bevorzugt wird Alkalihydrogensulfit und besonders bevorzugt Natriumhydrogensulfit eingesetzt.

Die Sulfite, insbesondere Natriumhydrogensulfit werden bevorzugt als Lösung vor der Einengung der Fermentationsbrühe zugesetzt. Die eingesetzte Menge wird bevorzugt bei der Einstellung des Sulfat-/L-Aminosäure-Verhältnisses berücksichtigt.

Bei dem erfindungsgemäßen Verfahren zur Herstellung von L-Aminosäuren (insbesondere L-Lysin) enthaltenden Futtermitteladditiven werden solche Vorgehensweisen bevorzugt, bei denen Produkte erhalten werden, die Bestandteile der Fermentationsbrühe enthalten.

### Abbildungen

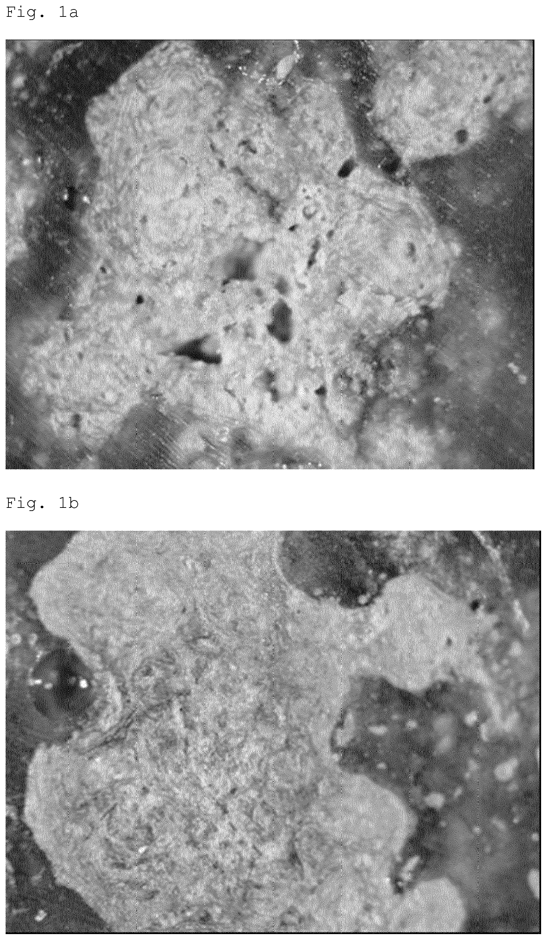

In den Figuren 1a und 1b ist ein Schnittbild von in Kunstharz eingebettetem Granulat dargestellt, das aus der Fermentationsbrühe ohne Zugabe einer oberflächenaktiven Substanz erhalten wurde (Fig. 1a) im Vergleich zu einem Schnittbild eines Granulats, dem vor Durchführung der Sprühgranulation Maisquellwasser hinzugegeben worden war (Fig. 1b). In Fig. 1a sind deutliche Kavitäten sichtbar, während das Granulat gemäß Fig. 1b eine kompaktere Struktur ohne sichtbare Kavitäten aufweist.

### Ausführungsbeispiele

### Laborversuche

Die Laborversuche wurden in einem Laborgranulator durchgeführt. Der Laborgranulator arbeitet mit einem Wirbelschichtbett. Die Lysin-haltige Fermentationsbrühe wird von oben in den Reaktor eingesprüht. Die Wirbelschichtzuluft kann durch regelbare Gebläsegeschwindigkeiten und eine elektrische Heizung in Menge und Temperatur eingestellt werden. Der Luftstrom wird so eingestellt, dass eine gut durchmischte Wirbelschicht erreicht wird. Die Sprühdüse ist eine pneumatische Zweistoffdüse. Der Zerstäubungsluftdruck wurde auf 0,5 bar in jedem Versuch eingestellt. Die Brühe wurde auf 60°C vorgeheizt und mit Hilfe einer Schlauchpumpe mit variabler Geschwindigkeitseinstellung gefördert. Die Lysin-haltige Fermentationsbrühe wurde vor der Sprühtrocknung auf einen Wassergehalt von ca. 40 Gew.-% eingedampft und anschließend die oberflächenaktive Substanz hinzugegeben.

Die primäre Wirbelschicht wurde erzeugt, indem Keime vorgelegt wurden, die aus der Produktion entnommen und auf eine Partikelgröße von 200 bis 710 µm abgesiebt wurden. Als Zielgröße wurde die Partikeldichte gewählt, da hier eine gute Korrelation zwischen Produktion und Labor festgestellt wurde und eine direkte Abhängigkeit der Partikelgröße von der Schüttdichte nachgewiesen werden konnte.

Die Schüttdichte wurde wie folgt bestimmt: Ein leerer Standzylinder (250 ml Volumen) wurde auf einer Waage platziert, mit dem körnigen Produkt befüllt und anschließend das Gewicht pro Volumeneinheit ermittelt.

Zur Ermittlung der Partikeldichte wurden die Leerräume im Standzylinder mit Methanol aufgefüllt. Das Lückenvolumen konnte so aufgrund der Gewichtszunahme und der bekannten Dichte des Methanols (0,7918 g/ml) ermittelt werden. Aus der Differenz zwischen Gesamtvolumen und Volumen des Methanols ergibt sich so das Volumen der Partikel. Die Partikeldichte ergibt sich dann dadurch, indem man das zuvor ermittelte Gewicht der Partikel nicht auf das Gesamtvolumen des Messzylinders bezieht, sondern auf das ermittelte Volumen der Partikel.

Alternativ kann die Partikeldichte auch unter Verwendung eines Pyknometers ermittelt werden.

### Beispiel 1: Einfluss eines Antischaummittels auf die Partikeldichte

Lysinsulfat enthaltende Fermentationsbrühe wurde auf einen Wassergehalt von ca. 40 Gew.-% eingedampft. Die so bereitgestellte Fermentationsbrühe enthielt bereits 0,13 Gew.-% des Antischaummittels CLEROL FBA 975-US. Die Fermentationsbrühe wurde anschließend mit unterschiedlichen Mengen des Fettsäurealkylpolyglycolesters (CLEROL FBA 975-US) versetzt und anschließend unter Verwendung eines Laborgranulators in ein Granulat überführt. Als Vergleichsbeispiel wurde die eingeengte Fermentationsbrühe ohne nachträglichen Zusatz des Fettsäurealkylpolyglycolesters der Sprühgranulation unterworfen. Der Einfluss der nachträglichen Zugabe des Fettsäurealkylpolyglycolesters auf die Partikeldichte kann der nachfolgenden Tabelle entnommen werden.

| Tabelle 1: Einfluss eines Antischaummittels auf die Partikeldichte von Lysin-haltigem Granulat | Partikeldichte [g/cm3] |
|---|---|
| Fermentationsbrühe | 1,133 |
| + 0,09 Gew.-% Antischaummittel | 1,137 |
| + 0,13 Gew.-% Antischaummittel | 1,155 |
| + 0,26 Gew.-% Antischaummittel | 1,145 |

Es ist zu erkennen, dass die nachträgliche Zugabe des Antischaummittels vor Durchführung der Granulation zu einer deutlichen Erhöhung der Partikeldichte des erhältlichen Granulats führt.

### Beispiel 2: Einfluss von Lipiden auf die Partikeldichte

Lysinsulfat enthaltende Fermentationsbrühe wurde auf einen Wassergehalt von ca. 40 Gew.-% eingedampft. Die so bereitgestellte Fermentationsbrühe enthielt bereits 0,13 Gew.-% des Antischaummittels CLEROL FBA 975-US. Die Fermentationsbrühe wurde anschließend mit unterschiedlichen Mengen an lipid-haltigen Komponenten versetzt. Als lipidhaltige Komponenten eingesetzt wurden Lecithin (Aquagran CP 100) sowie Maisquellwasser ("CSL"), das Lecithin-haltig ist. Die Fermentationsbrühe wurde anschließend in der Sprühgranulation zu Granulat verarbeitet. Als Vergleichsbeispiel wurde die eingeengte Fermentationsbrühe ohne nachträglichen Zusatz lipid-haltiger Komponenten in der Sprühgranulation eingesetzt. Die Ergebnisse sind der nachfolgenden Tabelle zu entnehmen.

| Tabelle 2: Einfluss von Lipiden auf die Partikeldichte von Lysin-haltigem Granulat und die realisierbare Sprührate in der Granulation | Partikeldichte [g/cm3] | Sprührate [g/min] |
|---|---|---|
| Fermentationsbrühe | 1,132 | 9,3 |
| + 8,23 Gew.-% CSL | 1,143 | 10,8 |
| + 0,025 Gew.-% Aquagran CP 1000 | 1,142 | 10,9 |
| + 0,05 Gew.-% Aquagran CP 1000 | 1,147 | 11,4 |
| + 0,25 Gew.-% Aquagran CP 1000 | 1,149 | 10,7 |
| + 0,5 Gew.-% Aquagran CP 1000 | 1,146 | 11,2 |

Es ist zu erkennen, dass auch die nachträgliche Zugabe von Lecithin und Maiquellwasser vor Durchführung der Granulation zu einer deutlichen Erhöhung der Partikeldichte des erhältlichen Granulats führt.

Zusätzlich zur erhöhten Partikeldichte wurde beobachtet, dass die Zugabe der oberflächenaktiven Komponenten dazu führte, dass bei gleichem Energieeintrag in den Granulationsapparat und gleichen Austrittsbedingungen der Granulationsluft eine erhöhte Sprührate einstellbar ist (rechte Spalte der Tabelle). Dies bedeutet, dass eine energieeffizientere Trocknung möglich ist.

### Beispiel 3: Einfluss von oberflächenaktiven Substanzen auf den Granulationsprozess im Produktionsmaßstab

Aufgrund der Laborexperimente wurde Maisquellwasser nun im Produktionsmaßstab bei der Lysinherstellung als Additiv eingesetzt. Die Vergleichsversuche erfolgten ohne Zugabe von Maisquellwasser.

Zur Versuchsdurchführung wurde das Fermentationsmedium nach Beendigung der Fermentation zunächst auf einen Wassergehalt von ca. 40 Gew.-% eingeengt. Anschließend wurde Maisquellwasser in einer Menge von ca. 8 Gew.-% hinzugegeben. Im Vergleichsversuch wurde das Maisquellwasser entsprechend weggelassen.

Anschließend erfolgte jeweils Sprühgranulation in einem Granulator. Danach wurden die erhaltenen Schüttdichten bestimmt. Die Ergebnisse sind der nachfolgenden Tabelle zu entnehmen.

| Tabelle 3: Einfluss von Maisquellwasser auf die Schüttdichte von Lysin-haltigem Granulat | Schüttdichte [kg/m3] |
|---|---|
| Fermentationsmedium | 620,2 |
| + 8 Gew.-% Maisquellwasser | 665,4 |

Wie zu erkennen, wird die Schüttdichte durch Zugabe von Maisquellwasser zu dem Fermentationsmedium vor der Sprühgranulation deutlich erhöht.

Auch im Produktionsmaßstab konnten wie im Labormaßstab nach Zugabe des Maisquellwassers die Sprühraten erhöht werden, ohne den Gehalt an Restfeuchte zu erhöhen. Dies führte zu deutlich niedrigeren Auslasstemperaturen in der Granulatorluft.

## Patentansprüche

1. Verfahren zur Herstellung eines Futtermitteladditivs, **dadurch gekennzeichnet, dass** man eine L-Aminosäure enthaltende Fermentationsbrühe, die einen Wassergehalt von 35 bis 75 Gew.-% und einen Gehalt an oberflächenaktiver Substanz von 0,025 bis 20 Gew.-% aufweist, durch Trocknung in eine partikuläre Zusammensetzung überführt, wobei die Fermentationsbrühe Antischaummittel in einer Menge von 0,025 bis 20 Gew.-% oder Maisquellwasser in einer Menge von 1 bis 10 Gew.-% enthält und wobei das Antischaummittel ausgewählt ist aus Polyglykolen und Phospholipiden und wobei das Maisquellwasser eine Trockenmasse von mindestens 40 Gew.-% und einen Restzuckergehalt von höchstens 2 Gew.-% aufweist.

2. Verfahren zur Herstellung eines L-Aminosäure enthaltenden Futtermitteladditivs, folgende Schritte umfassend:
a) Bereitstellung einer L-Aminosäure enthaltenden Fermentationsbrühe,
b) gegebenenfalls Einstellung der L-Aminosäure enthaltenden Fermentationsbrühe auf einen Wassergehalt von 35 bis 75 Gew.-%,
c) Hinzugabe von oberflächenaktiver Substanz zu der Fermentationsbrühe nach Beendigung der Fermentation,
d) Trocknung des erhaltenen Gemisches zu einer partikulären Zusammensetzung,
e) gegebenenfalls Partikelgrößeneinstellung durch Walzen, Siebe etc..

3. Verfahren nach Anspruch 1 oder 2, **dadurch gekennzeichnet, dass** vor der Trocknung der Wassergehalt in der Fermentationsbrühe auf einen Wert von 35 bis 50 Gew.-% eingestellt wird, wobei die Einstellung des Wassergehalts vorzugsweise durch Eindampfen, Umkehrosmose oder Nanofiltration erfolgt.

4. Verfahren nach einem der Ansprüche 2 oder 3, **dadurch gekennzeichnet, dass** die oberflächenaktive Substanz ausgewählt ist aus Maisquellwasser, Lipiden, Antischaummitteln und Tensiden sowie Mischungen davon.

5. Verfahren nach Anspruch 4, **dadurch gekennzeichnet, dass** das Antischaummittel ausgewählt ist aus der Gruppe bestehend aus Polysiloxanen, Mono- und Polyglykolen, Phospholipiden sowie Fettsäure-Glyceriden.

6. Verfahren nach einem der vorhergehenden Ansprüche, **dadurch gekennzeichnet, dass** die oberflächenaktive Komponente vor der Trocknung in einer Menge von 0,025 bis 20 Gew.-%, insbesondere 0,1 bis 20 Gew.-%, vorzugsweise 0,3 bis 10 Gew.-%, in der Fermentationsbrühe enthalten ist.

7. Verfahren nach einem der vorhergehenden Ansprüche, **dadurch gekennzeichnet, dass** die Trocknung durch Sprühtrocknung, vorzugsweise Sprühgranulation, erfolgt, wobei bei der Sprühgranulation vorzugsweise ein Wirbelschicht-Reaktor eingesetzt wird.

8. Verfahren nach einem der vorhergehenden Ansprüche, **dadurch gekennzeichnet, dass** es sich bei der L-Aminosäure um L-Lysin, L-Methionin, L-Threonin, L-Valin oder L-Tryptophan, vorzugsweise um L-Lysin, handelt.

9. Verfahren nach einem der vorhergehenden Ansprüche, **dadurch gekennzeichnet, dass** es sich bei der produzierten Aminosäure um L-Lysin handelt und dass in einem Verfahrensschritt nach Beendigung der Fermentation und vor Beginn der Trocknung Ammoniumsulfat und/oder Schwefelsäure zu der Fermentationsbrühe hinzugegeben wird, um ein Sulfat/L-Aminosäure-Verhältnis von 0,85 bis 1,2 einzustellen.

10. Verfahren nach einem der vorhergehenden Ansprüche, **dadurch gekennzeichnet, dass** die in der Trocknung eingesetzte Fermentationsbrühe folgende Eigenschaften aufweist:
a) Biomasse-Gehalt von 2 bis 12 Gew.-%, bevorzugt 3 bis 10 Gew.-%, besonders bevorzugt 4 bis 8 Gew.-%;
b) Gehalt an L-Aminosäure, vorzugsweise L-Lysin, (als Aminosäurebase) von 12 bis 48 Gew.-%;
c) Feststoffgehalt (inklusive Biomasse) von 25 bis 70 Gew.-%, bevorzugt 35 bis 60 Gew.-%;
d) Gehalt an oberflächenaktiver Substanz von 0,025 bis 20 Gew.-%, vorzugsweise 0,1 bis 20 Gew.-%, insbesondere 0,3 bis 10 Gew.-%;
e) Gew.-%-Verhältnis von Sulfat zu L-Aminosäure, insbesondere L-Lysin, von 0,8 bis 1,2;
f) pH-Wert von 3,5 bis 7,0, bevorzugt von 4,0 bis 5,0.

11. Körniges Futtermitteladditiv, folgende Merkmale umfassend:
a) Gehalt an L-Aminosäure, vorzugsweise L-Lysin, von mindestens 20 Gew.-%, vorzugsweise 25 bis 60 Gew.-%, insbesondere 30 bis 60 oder 40 bis 60 Gew.-%, besonders bevorzugt 45 bis 55 Gew.-%;
b) mittlerer Korngrößendurchmesser von 60 bis 2500 µm, vorzugsweise 60 bis 1500 µm;
c) Biomassegehalt von mindestens 3 Gew.-%, vorzugsweise mindestens 4 oder 5 Gew.-%;
d) Gehalt an oberflächenaktiver Substanz von 0,04 bis 35 Gew.-%, vorzugsweise 0,15 bis 30 Gew.-%, besonders bevorzugt 0,5 bis 15 Gew.-%, wobei Antischaummittel in einer Menge von 0,04 bis 35 Gew.-% oder Maisquellwasser in einer Menge von 3 bis 25 Gew.-% enthalten ist und das Antischaummittel ausgewählt ist aus Polyglykolen und Phospholipiden und das Maisquellwasser eine Trockenmasse von mindestens 40 Gew.-% und einen Restzuckergehalt von höchstens 2 Gew.-% aufweist;
e) vorzugsweise einen Wassergehalt (Restfeuchte) von maximal 3,5 Gew.-%;
f) vorzugsweise eine das Korn umgebende Schicht aus essbarem Öl.

12. Futtermitteladditiv gemäß Anspruch 11 oder 12, **dadurch gekennzeichnet, dass** die L-Aminosäure zumindest teilweise als Sulfatsalz vorliegt, wobei das molare Verhältnis von Sulfat zu L-Aminosäure vorzugsweise mindestens 0,5, besonders bevorzugt 0,8 bis 1,2, beträgt und es sich bei der L-Aminosäure vorzugsweise um L-Lysin handelt.

13. Futtermitteladditiv nach einem der vorherigen Ansprüche, **dadurch gekennzeichnet, dass** mindestens 75 Gew.-% der Partikel einen Korngrößendurchmesser von > 63 µm bis < 2500 µm, vorzugsweise von > 63 µm bis < 2000 µm, aufweisen und vorzugsweise der Anteil der Partikel mit einem Korngrößendurchmesser von < 63 µm 20 Gew.-% oder weniger beträgt.

14. Futtermitteladditiv nach einem der vorhergehenden Ansprüche, **dadurch gekennzeichnet, dass** es weniger als 30 Vol.-%, vorzugsweise weniger als 20 Vol.-%, besonders bevorzugt weniger als 15 Vol.-% Hohlräume aufweist.

## Claims

1. Method for preparing a feed additive, **characterized in that** a fermentation broth containing L-amino acid, which has a water content of 35 to 75% by weight and a content of surface-active substance of 0.025 to 20% by weight, is converted by drying into a particulate composition wherein the fermentation broth comprises antifoaming agent in an amount of 0.025 to 20% by weight or corn steep liquor in an amount of 1 to 10% by weight and wherein the antifoaming agent is selected from polyglycols and phospholipids and wherein the corn steep liquor has a dry mass of at least 40% by weight and a residual sugar content of at most 2% by weight.

2. Method for preparing a feed additive containing L-amino acid, comprising the following steps:
a) providing a fermentation broth containing L-amino acid,
b) optionally adjusting the fermentation broth containing L-amino acid to a water content of 35 to 75% by weight,
c) adding a surface-active substance to the fermentation broth after completion of the fermentation,
d) drying the resulting mixture to give a particulate composition,
e) optionally adjusting the particle size by rolling, sieving etc.

3. Method according to Claim 1 or 2, **characterized in that** the water content in the fermentation broth is adjusted to a value of 35 to 50% by weight before drying, wherein the adjustment of the water content is preferably carried out by evaporation, reverse osmosis or nanofiltration.

4. Method according to either of Claims 2 and 3, **characterized in that** the surface-active substance is selected from corn steep liquor, lipids, antifoaming agents and surfactants and also mixtures thereof.

5. Method according to Claim 4, **characterized in that** the antifoaming agent is selected from the group consisting of polysiloxanes, mono- and polyglycols, phospholipids and fatty acid glycerides.

6. Method according to any of the preceding claims, **characterized in that** the surface-active component is present in the fermentation broth before drying in an amount of 0.025 to 20% by weight, particularly 0.1 to 20% by weight, preferably 0.3 to 10% by weight.

7. Method according to any of the preceding claims, **characterized in that** the drying is conducted by spray-drying, preferably spray granulation, wherein a fluidized bed reactor is preferably used for the spray granulation.

8. Method according to any of the preceding claims, **characterized in that** the L-amino acid is L-lysine, L-methionine, L-threonine, L-valine or L-tryptophan, preferably L-lysine.

9. Method according to any of the preceding claims, **characterized in that** the amino acid produced is L-lysine and that in a method step after completion of the fermentation and before the start of the drying, ammonium sulphate and/or sulphuric acid is added to the fermentation broth in order to establish a sulphate/L-amino acid ratio of 0.85 to 1.2.

10. Method according to any of the preceding claims, **characterized in that** the fermentation broth used in the drying has the following properties:
a) biomass content of 2 to 12% by weight, preferably 3 to 10% by weight, particularly preferably 4 to 8% by weight;
b) L-amino acid content, preferably L-lysine, (as amino acid base) of 12 to 48% by weight;
c) solids content (including biomass) of 25 to 70% by weight, preferably 35 to 60% by weight;
d) surface-active substance content of 0.025 to 20% by weight, preferably 0.1 to 20% by weight, particularly 0.3 to 10% by weight;
e) % by weight ratio of sulphate to L-amino acid, particularly L-lysine, of 0.8 to 1.2;
f) pH of 3.5 to 7.0, preferably 4.0 to 5.0.

11. Granular feed additive, comprising the following features:
a) L-amino acid content, preferably L-lysine, of at least 20% by weight, preferably 25 to 60% by weight, particularly 30 to 60 or 40 to 60% by weight, particularly preferably 45 to 55% by weight;
b) mean particle diameter of 60 to 2500 µm, preferably 60 to 1500 µm;
c) biomass content of at least 3% by weight, preferably at least 4 or 5% by weight;
d) surface-active substance content of 0.04 to 35% by weight, preferably 0.15 to 30% by weight, particularly preferably 0.5 to 15% by weight wherein antifoaming agent is present in an amount of 0.04 to 35% by weight or corn steep liquor in an amount of 3 to 25% by weight and the antifoaming agent is selected from polyglycols and phospholipids and the corn steep liquor has a dry mass of at least 40% by weight and a residual sugar content of at most 2% by weight;
e) preferably a water content (residual moisture) of at most 3.5% by weight;
f) preferably a layer of edible oil coating the particle.

12. Feed additive according to Claim 11 or 12, **characterized in that** the L-amino acid is present at least in part as a sulphate salt, wherein the molar ratio of sulphate to L-amino acid is preferably at least 0.5, particularly preferably 0.8 to 1.2 and the L-amino acid is preferably L-lysine.

13. Feed additive according to any of the preceding claims, **characterized in that** at least 75% by weight of the particles have a particle diameter of > 63 µm to < 2500 µm, preferably > 63 µm to < 2000 µm and the proportion of the particles having a particle diameter of < 63 µm is preferably 20% by weight or less.

14. Feed additive according to any of the preceding claims, **characterized in that** said additive has less than 30% by volume, preferably less than 20% by volume, particularly preferably less than 15% by volume of cavities.

## Revendications

1. Procédé pour la préparation d'un additif de nourriture pour animaux, **caractérisé en ce qu'**on transforme un bouillon de fermentation contenant un acide L-aminé, qui présente une teneur en eau de 35 à 75% en poids et une teneur en substance tensioactive de 0,025 à 20% en poids, par séchage, en une composition particulaire, le bouillon de fermentation contenant un antimousse en une quantité de 0,025 à 20% en poids ou de la liqueur de trempage de maïs en une quantité de 1 à 10% en poids et l'antimousse étant choisi parmi les polyglycols et les phospholipides et la liqueur de trempage de maïs présentant une masse sèche d'au moins 40% en poids et une teneur en sucre résiduel d'au plus 2% en poids.

2. Procédé pour la préparation d'un additif de nourriture pour animaux contenant un acide L-aminé, comprenant les étapes suivantes :
a) mise à disposition d'un bouillon de fermentation contenant un acide L-aminé
b) le cas échéant réglage du bouillon de fermentation contenant un acide L-aminé à une teneur en eau de 35 à 75% en poids,
c) addition d'une substance tensioactive au bouillon de fermentation après la fin de la fermentation,
d) séchage du mélange obtenu en une composition particulaire,
e) le cas échéant réglage de la grosseur de particule par laminage, tamisage, etc.

3. Procédé selon la revendication 1 ou 2, **caractérisé en ce que** la teneur en eau dans le bouillon de fermentation est réglée, avant le séchage, à valeur de 35 à 50% en poids, le réglage de la teneur en eau étant de préférence effectué par concentration par évaporation, par osmose inverse ou par nanofiltration.

4. Procédé selon l'une quelconque des revendications 2 ou 3, **caractérisé en ce que** la substance tensioactive est choisie parmi la liqueur de trempage de maïs, les lipides, les antimousses et les tensioactifs ainsi que leurs mélanges.

5. Procédé selon la revendication 4, **caractérisé en ce que** l'antimousse est choisi dans le groupe constitué par les polysiloxanes, les monoglycols et les polyglycols, les phospholipides ainsi que les glycérides d'acide gras.

6. Procédé selon l'une quelconque des revendications précédentes, **caractérisé en ce que** le composant tensioactif est contenu dans le bouillon de fermentation, avant le séchage, en une quantité de 0,025 à 20% en poids, en particulier de 0,1 à 20% en poids, de préférence de 0,3 à 10% en poids.

7. Procédé selon l'une quelconque des revendications précédentes, **caractérisé en ce que** le séchage est effectué par séchage par pulvérisation, de préférence par granulation par pulvérisation, un réacteur à lit tourbillonnant étant de préférence utilisé lors de la granulation par pulvérisation.

8. Procédé selon l'une quelconque des revendications précédentes, **caractérisé en ce qu'**il s'agit, pour l'acide L-aminé, de L-lysine, de L-méthionine, de L-thréonine, de L-valine ou de L-tryptophane, de préférence de L-lysine.

9. Procédé selon l'une quelconque des revendications précédentes, **caractérisé en ce qu'**il s'agit, pour l'acide aminé produit, de L-lysine et **en ce que** du sulfate d'ammonium et/ou de l'acide sulfurique est/sont ajouté(s) au bouillon de fermentation dans une étape de procédé après la fin de la fermentation et avant le début du séchage, pour régler un rapport sulfate/acide L-aminé de 0,85 à 1,2.

10. Procédé selon l'une quelconque des revendications précédentes, **caractérisé en ce que** le bouillon de fermentation utilisé dans le séchage présente les propriétés suivantes :
a) une teneur en biomasse de 2 à 12% en poids, de préférence de 3 à 10% en poids, de manière particulièrement préférée de 4 à 8% en poids ;
b) une teneur en acide L-aminé, de préférence en L-lysine (base d'acide aminé) de 12 à 48% en poids ;
c) une teneur en solides (biomasse incluse) de 25 à 70% en poids, de préférence de 35 à 60% en poids ;
d) une teneur en substance tensioactive de 0,025 à 20% en poids, de préférence de 0,1 à 20% en poids, en particulier de 0,3 à 10% en poids ;
e) un rapport des % en poids de sulfate à acide L-aminé, en particulier de L-lysine, de 0,8 à 1,2 ;
f) un pH de 3,5 à 7,0, de préférence de 4,0 à 5,0.

11. Additif granulé de nourriture pour animaux, comprenant les caractéristiques suivantes :
a) teneur en acide L-aminé, de préférence en L-lysine, d'au moins 20% en poids, de préférence de 25 à 60% en poids, en particulier de 30 à 60 ou de 40 à 60% en poids, de manière particulièrement préférée de 45 à 55% en poids ;
b) diamètre moyen des grosseurs de granule de 60 à 2500 µm, de préférence de 60 à 1500 µm ;
c) teneur en biomasse d'au moins 3% en poids, de préférence d'au moins 4 ou 5% en poids ;
d) teneur en substance tensioactive de 0,04 à 35% en poids, de préférence de 0,15 à 30% en poids, de manière particulièrement préférée de 0,5 à 15% en poids, l'antimousse étant contenu en une quantité de 0,04 à 35% en poids ou la liqueur de trempage de maïs étant contenue en une quantité de 3 à 25% en poids et l'antimousse étant choisi parmi les polyglycols et les phospholipides et la liqueur de trempage de maïs présentant une masse sèche d'au moins 40% en poids et une teneur en sucre résiduel d'au plus 2% en poids ;
e) de préférence une teneur en eau (humidité résiduelle) d'au maximum 3,5% en poids ;
f) de préférence une couche entourant le granule en huile comestible.

12. Additif de nourriture pour animaux selon la revendication 11 ou 12, **caractérisé en ce que** l'acide L-aminé se trouve au moins partiellement sous forme de sel de sulfate, le rapport molaire de sulfate à acide L-aminé étant de préférence de 0,5, de manière particulièrement préférée de 0,8 à 1,2, et l'acide L-aminé étant de préférence la L-lysine.

13. Additif de nourriture pour animaux selon l'une quelconque des revendications précédentes, **caractérisé en ce qu'**au moins 75% des particules présentent un diamètre de grosseur de granule de > 63 µm à < 2500 µm, de préférence de > 63 µm à < 2000 µm et la proportion de particules présentant un diamètre de grosseur de granule < 63 µm étant de préférence inférieure ou égale à 20% en poids.

14. Additif de nourriture pour animaux selon l'une quelconque des revendications précédentes, **caractérisé en ce qu'**il présente moins de 30% en volume, de préférence moins de 20% en volume, de manière particulièrement préférée moins de 15% en volume d'espaces creux.
